# EUROPEAN PATENT APPLICATION

(11) **EP 4 407 754 A1**
(43) Date of publication of application: **31.07.2024**
(21) Application number: 23865775.3
(22) Date of filing: 04.09.2023
(51) Int. Cl.: H01M 10/643, H01M 10/6555, H01M 10/653, H01M 10/6562, H01M 10/613, H01M 50/213, H01M 50/291, H01M 50/293

(54) **BATTERY MODULE HAVING COOLING FUNCTION AND BATTERY PACK COMPRISING SAME**

(30) Priority: 14.09.2022 KR 20220115680
(71) Applicant: LG Energy Solution, Ltd., Seoul 07335 (KR)
(72) Inventor: JEON, Byeong Jun, Daejeon 34122 (KR); SON, Young Su, Daejeon 34122 (KR)
(74) Representative: Plasseraud IP
(86) International application number: PCT/KR2023/013197
(87) International publication number: WO 2024/058477

(57) **Abstract**

The present invention relates to a battery module having a cooling function and a battery pack comprising same, and more particularly to a battery module including a plurality of battery cells, a cell frame including a plurality of side plates and a bottom plate connecting lower edges of the plurality of side plates to each other, wherein the cell frame has a space portion accommodating the plurality of battery cells, and a cooling member located in the space portion being disposed so as to enclose a part of an outer surface of each of the plurality of battery cells accommodated in the space portion, wherein the cooling member includes a first member and a second member, the first member being disposed along a longitudinal direction of the plurality of battery cells and the second member being connected to one end of the first member, and a part of the second member is recessed in the bottom plate.

## Description

### [Technical Field]

This application claims the benefit of priority to Korean Patent Application No. 2022-0115680 filed on September 14, 2022, the disclosure of which is incorporated herein by reference in its entirety.

The present invention relates to a battery module having a cooling function and a battery pack including the same, and more particularly to a battery module having a cooling function configured to dissipate heat generated from a battery cell while having a structure resistant to external impact and a battery pack including the same.

### [Background Art]

With recent development of alternative energy due to air pollution and energy depletion caused as the result of use of fossil fuels, demand for secondary batteries capable of storing electrical energy that is produced has increased. Secondary batteries, which are capable of being charged and discharged, are widely used in various fields, such as mobile devices, electric vehicles, hybrid electric vehicles, and industrial robots.

Required capacities of secondary batteries used as energy sources of various kinds of electronic devices inevitably used in modern society have been increased due to an increase in usage of mobile devices, increasing complexity of the mobile devices, and development of electric vehicles. In order to satisfy demand of users, a plurality of battery cells is disposed in a small-sized device, whereas a battery module including a plurality of battery cells electrically connected to each other or a battery pack including a plurality of battery modules is used in a vehicle.

Meanwhile, safety is becoming increasingly important due to an issue such as overheating or overcharging of a battery cell, which may cause fire in the battery cell due to external impact. If heat generated from the battery cell is not appropriately removed, the lifespan of the battery cell may be reduced and in extreme situations, the battery cell may ignite or explode. Accordingly, cooling of the battery cell is essential.

In connection therewith, the following prior art document discloses a battery module having a heat dissipation structure including a heat dissipation tube configured to dissipate heat generated from a plurality of cylindrical cells adjacent to each other.

The prior art document has the advantage of preventing the concentration of high-temperature heat in some areas of the battery module and improving the cooling performance of the battery using the heat dissipation tube.

However, the heat dissipation tube 11 is constituted by a first heat dissipation tube portion, which is a circular tube having an annular section, a circular tube configured to surround the first heat dissipation tube portion, a circular tube having an annular section, and a frame portion configured to connect the first heat dissipation tube portion and the second heat dissipation tube portion to each other, which is not easy to manufacture due to the complex structure thereof. In addition, a holder portion 12 must be provided at the inside of a case 10 in order to fix the cylindrical cell in a state of enclosing the cylindrical cell. Furthermore, a heat dissipation portion made of graphite must be provided on an inner wall of the case, and a heat dissipation portion 13 configured to dissipate heat transferred thereto must be provided at the outside of the case.

Therefore, the battery module according to the prior art document has problems in that the structure of the battery module is very complex, which makes the battery module expensive to manufacture, and the cylindrical cell is physically vulnerable, especially in the event of external impact, because the cylindrical cell relies on only the holder portion.

(Prior Art Document)

(Patent Document 1) Korean Registered Patent Publication No. 2252334 (published on May 14, 2021)

### [ Disclosure]

### [Technical Problem]

The present invention has been made in view of the above problems, and it is an object of the present invention to provide a battery module having a cooling function capable of rapidly dissipating heat generated from a battery cell to the outside while having a simple structure and a battery pack including the same.

It is another object of the present invention to provide an impact-resistant battery module capable of minimizing breakage or flow of a battery cell even though external impact is applied thereto and a battery pack including the same.

### [Technical Solution]

In order to accomplish the above objects, a battery module according to the present invention includes a plurality of battery cells (B), a cell frame (100) including a plurality of side plates (110) and a bottom plate (120) connecting lower edges of the plurality of side plates (110) to each other, wherein the cell frame has a space portion (S) accommodating the plurality of battery cells (B), and a cooling member (200) located in the space portion (S) and being disposed so as to enclose a part of an outer surface of each of the plurality of battery cells (B) accommodated in the space portion, wherein the cooling member (200) includes a first member (210) and a second member, the first member being disposed along a longitudinal direction of the plurality of battery cells (B) and the second member (220) being connected to one end of the first member (210), and a part of the second member (220) is recessed in the bottom plate (120).

Also, in the battery module according to the present invention, the first member (210) may include a plurality of first surfaces (211) and a plurality of second surfaces, wherein each of the plurality of first surfaces includes a curved shape having a predetermined radius of curvature, so as to enclose the part of the outer surface of an adjacent one of the plurality of battery cells (B), wherein the plurality of second surfaces (212) interconnect the plurality of first surfaces (211) adjacent to each other, and the second member (220) may be a flat plate having a predetermined thickness and may be disposed perpendicular to the first member (210).

Also, in the battery module according to the present invention, each of the first member (210) and the second member (220) may include a metal.

Also, in the battery module according to the present invention, the second member (220) may include an uneven portion provided at an outer surface of an edge of the second member, and the uneven portion may be recessed in the bottom plate (120).

Also, in the battery module according to the present invention, the bottom plate (120) may include a plurality of heat dissipation holes (121), and a middle part of the second member (220) may be exposed to the outside through the plurality of heat dissipation holes (121).

Also, in the battery module according to the present invention, the one end of the first member (210) may be located in the center of the second member (220).

Also, in the battery module according to the present invention, a resin layer (300) may be interposed between the outer surface of each of the plurality of battery cells (B) and an inner surface of the cell frame, and between the outer surface of each of the plurality of battery cells (B) and the cooling member.

Also, in the battery module according to the present invention, the resin layer may include a thermally conductive resin.

Also, in the battery module according to the present invention, three or more cooling members (200) may be located at the outer surface of each of the plurality of battery cells (B).

Also, in the battery module according to the present invention, the cooling member (200) may include a plurality of first members (210) being fixed to one second member (220), wherein the second member includes a plurality of openings (221).

In addition, the present invention provides a battery pack including the battery module.

In addition, a battery module manufacturing method according to the present invention includes a first step of preparing a cooling member including a first member and a second member, the first member being disposed along a longitudinal direction of a battery cell (B) and the second member being connected to one end of the first member, wherein the cooling member includes a metal material, a second step of preparing a cell frame including a plurality of side plates and a bottom plate, the cell frame having a space portion (S) configured to receive the battery cell (B), the cooling member being accommodated in the space portion (S), and a third step of receiving the battery cell (B) in the space portion (S) of the cell frame, wherein, in the second step, the cell frame is prepared by insert injection molding, such that a part of the second member is recessed in the bottom plate.

Also, the battery module manufacturing method according to the present invention may further include filling the space portion (S) with a thermally conductive resin, such that a thermally conductive resin layer is interposed between an outer surface of the battery cell (B) and an inner surface of the cell frame, and between the outer surface of the battery cell (B) and the cooling member after the second step.

Also, in the battery module manufacturing method according to the present invention, in the second step, the bottom plate may include a plurality of heat dissipation holes such that a part of the second member is exposed to the outside.

### [ Advantageous Effects]

As is apparent from the above description, a battery module having a cooling function according to the present invention and a battery pack including the same have a merit in that a cooling member, made of a metal material, fixed to a cell frame is located so as to enclose a battery cell, whereby it is possible to easily dissipate heat generated from the battery cell and to contribute to process simplification due to structural simplicity thereof.

In addition, the battery module having the cooling function according to the present invention and the battery pack including the same have an advantage in that a thermally conductive resin layer is provided at an outer surface of the battery cell, whereby it is possible to easily transfer heat to the cooling member and to prevent shaking of the battery cell when external impact is applied thereto.

In addition, the battery module having the cooling function according to the present invention and the battery pack including the same have a merit in that a part of the cooling member is coupled to the cell frame by insert injection molding, whereby it is possible to easily and securely fix the cooling member to the cell frame.

Furthermore, the battery module having the cooling function according to the present invention and the battery pack including the same have an advantage in that a part of the cooling member is exposed to the outside through a heat dissipation hole in the cell frame, whereby it is possible to improve the heat dissipation effect.

### [ Description of Drawings]

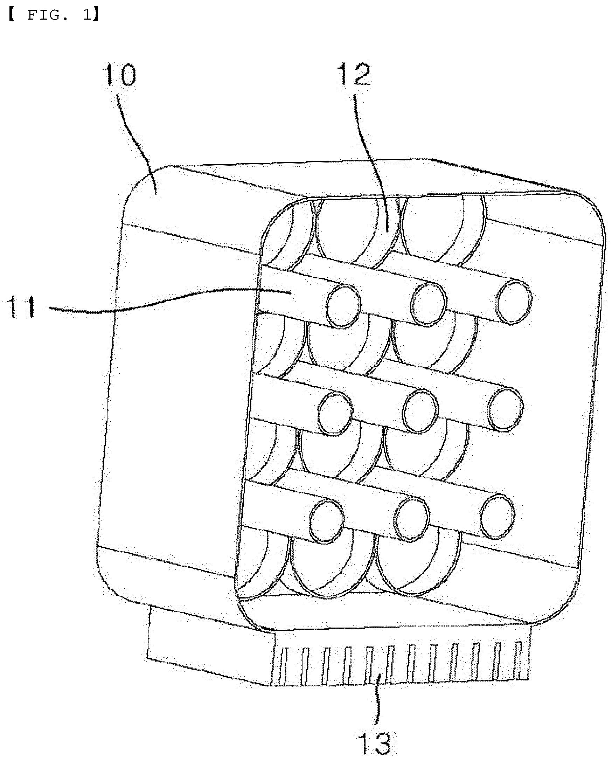

FIG. 1 is a conceptual view of a conventional battery module.
FIG. 2 is a perspective view of a battery module according to a first embodiment of the present invention.
FIG. 3 is a plan view of the battery module shown in FIG. 2.
FIG. 4 is a perspective view of a cell frame constituting the battery module shown in FIG. 2 when viewed from above in one direction.
FIG. 5 is a perspective view of the cell frame constituting the battery module shown in FIG. 2 when viewed from below in one direction.
FIG. 6 is an enlarged perspective view of a cooling member provided at the cell frame of FIG. 4.
FIG. 7 is a partial sectional view taken along direction A-A of FIG. 3.
FIG. 8 is a perspective view of a cooling member according to a second embodiment of the present invention.
FIG. 9 is a perspective view of a cell frame constituting a battery module according to a third embodiment of the present invention when viewed from below in one direction.
FIG. 10 is a perspective view of a cooling member constituting the battery module shown in FIG. 9.
FIG. 11 is a perspective view of a cooling member according to a fourth embodiment of the present invention.
FIG. 12 is a flowchart illustrating a method of manufacturing the battery module according to the first embodiment of the present invention.

### [ Best Mode]

Now, preferred embodiments of the present invention will be described in detail with reference to the accompanying drawings such that the preferred embodiments of the present invention can be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

In addition, the same reference numbers will be used throughout the drawings to refer to parts that perform similar functions or operations. In the case in which one part is the to be connected to another part in the entire specification, not only may the one part be directly connected to the other part, but also, the one part may be indirectly connected to the other part via a further part. In addition, that a certain element is included does not mean that other elements are excluded, but means that such elements may be further included unless mentioned otherwise.

Hereinafter, a battery module having a cooling function according to the present invention will be described with reference to the accompanying drawings.

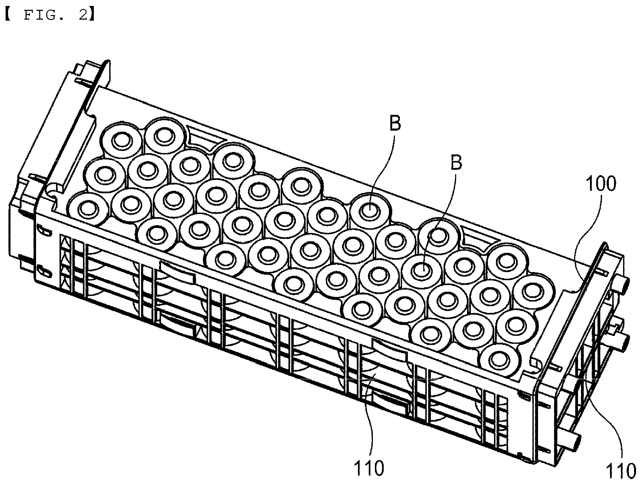

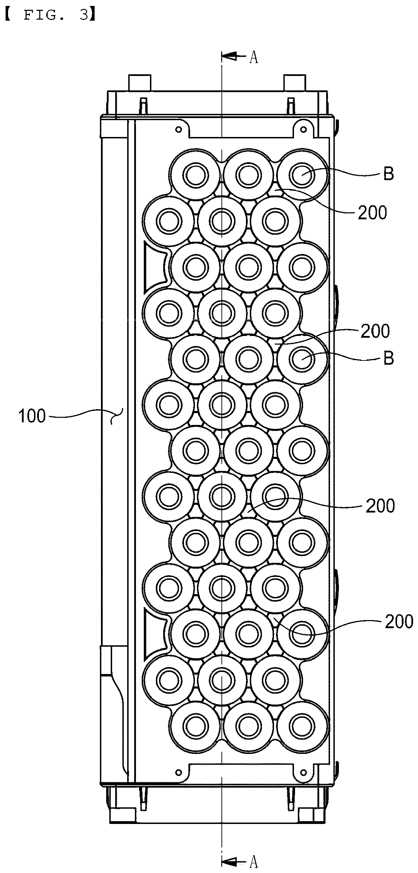

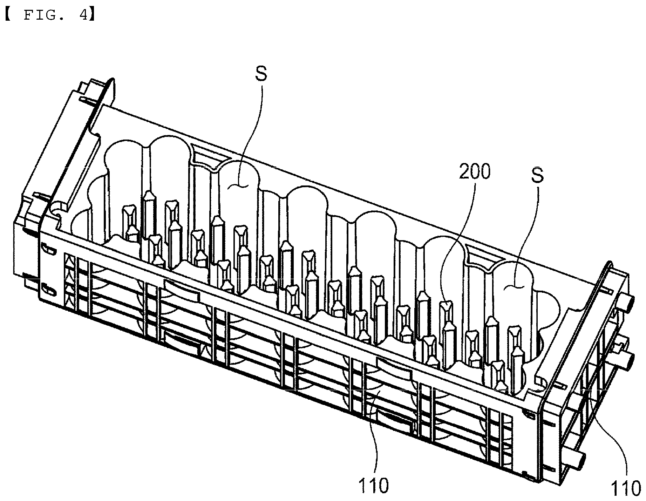

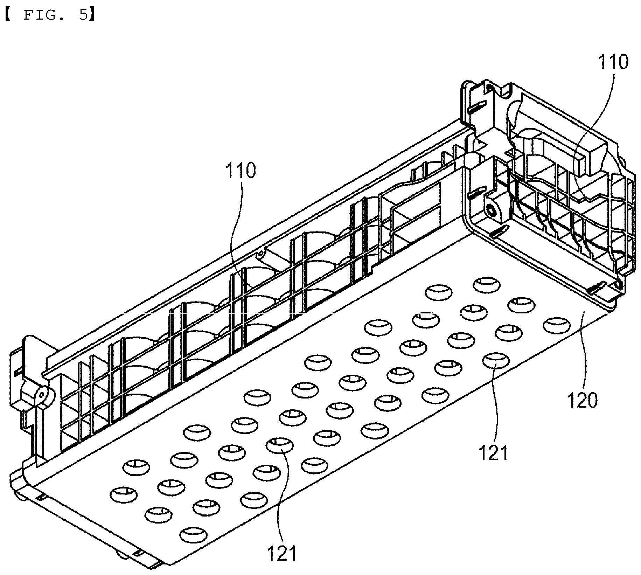

FIG. 2 is a perspective view of a battery module according to a first embodiment of the present invention, and FIG. 3 is a plan view of the battery module shown in FIG. 2. In addition, FIG. 4 is a perspective view of a cell frame constituting the battery module shown in FIG. 2 when viewed from above in one direction, and FIG. 5 is a perspective view of the cell frame constituting the battery module shown in FIG. 2 when viewed from below in one direction.

As shown in FIGs. 2 to 5, the battery module having the cooling function according to the present invention includes a plurality of battery cells B, a cell frame 100 configured to receive the battery cells B, and a cooling member 200 configured to discharge heat generated from the battery cells B and to support and fix the battery cells B. Of course, it is obvious that a wire, a busbar, and the like configured to electrically connect the battery cells B to each other may be provided.

The battery cell B according to the present invention may be a cylindrical battery cell or a prismatic battery cell, and is preferably a cylindrical battery cell. The cylindrical battery cell B includes an electrode assembly, an insulating member, a positive electrode lead wire, a cap assembly, and a battery can configured to receive the above components. The electrode assembly may be a jelly-roll type electrode assembly, which is configured to have a structure in which a long sheet type positive electrode and a long sheet type negative electrode are wound in the state in which a separator is interposed therebetween; a stacked type electrode assembly including unit cells, each of which is configured to have a structure in which a rectangular positive electrode and a rectangular negative electrode are stacked in the state in which a separator is interposed therebetween; a stacked and folded type electrode assembly, which is configured to have a structure in which unit cells are wound using a long separation film; or a laminated and stacked type electrode assembly, which is configured to have a structure in which unit cells are stacked in the state in which a separator is interposed therebetween and are then attached to each other.

In general, the positive electrode lead wire, which is attached to an upper end of the electrode assembly, is electrically connected to the cap assembly, and a negative electrode lead wire, which is attached to a lower end of the electrode assembly, is connected to the bottom of the battery can. Meanwhile, the insulating member may be located on the top of the electrode assembly, and the insulating member may serve to insulate the electrode assembly and the cap assembly from each other.

The cap assembly is located on the top of the insulating member, is electrically connected to the positive electrode lead wire attached to the upper end of the electrode assembly, and is coupled to an upper open end of the battery can to seal the electrode assembly received in the battery can.

Specifically, the cap assembly may be configured such that a current blocking member, a current blocking gasket, a safety vent, and a top cap are sequentially stacked from below, and a crimping gasket and a holder for welding may be located at outer edges of the safety vent and top cap.

The cell frame 100 may be formed so as to have a roughly hexahedral shape provided with a space portion S so as to receive the battery cells B. More specifically, the cell frame may include four side plates 110 and one bottom plate 120 configured to connect the lower edges of the side plates 110 to each other.

Here, it is preferable for the bottom plate 120 to be provided with a plurality of heat dissipation holes 121, which will be described in detail later.

Meanwhile, the cell frame 100, which is constituted by four side plates 110 and one bottom plate 120, may be made of plastic; however, the present invention is not necessarily limited thereto.

The cooling member 200 is located in the space portion S and is disposed so as to enclose a part of an outer surface of each of the battery cells B received in the space portion. At this time, the cooling member 200 is fixed to the bottom plate 120.

As shown in FIGs. 2 and 3, six cooling members 200 are disposed so as to enclose one battery cell B. At this time, one cooling member 200 may be located between outer surfaces of a total of three battery cells B received in a state of being adjacent to each other.

Although six cooling members 200 are shown as being disposed at an outer surface of one battery cell B in the figures, which is merely an example, three or more cooling members 200 may be disposed at the outer surface of one battery cell B.

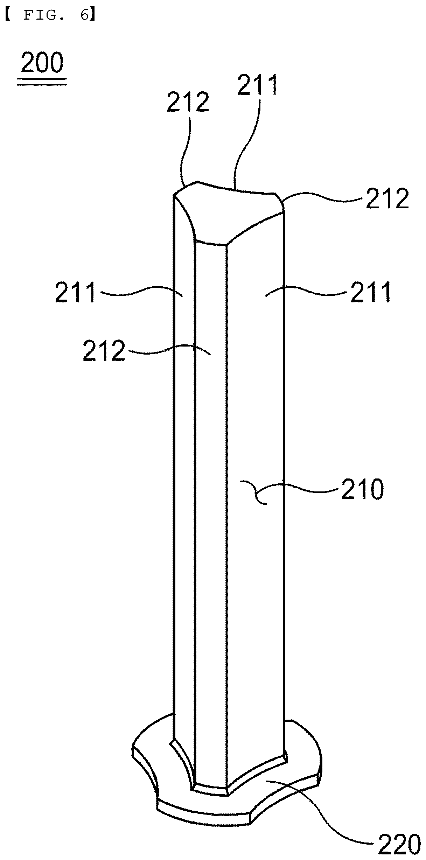

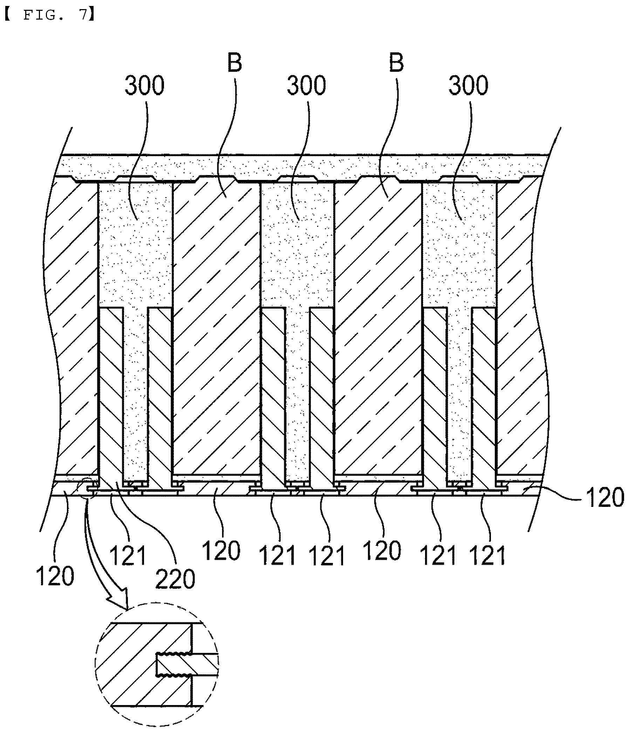

FIG. 6 is an enlarged perspective view of the cooling member provided at the cell frame of FIG. 4, and FIG. 7 is a partial sectional view taken along direction A-A of FIG. 3.

Referring first to FIG. 6, the cooling member 200 may include a first member 210 located in a longitudinal direction of the battery cell B and a second member 220 connected to one end of the first member 210.

The first member 210 may include three first surfaces 211 and three second surfaces 212 configured to interconnect the first surfaces 211 located adjacent to each other. Here, it is preferable for each of the first surfaces 211 to be curved with a radius of curvature equal or similar to the outer surface of the battery cell B so as to enclose the outer surface of the battery cell. The second surfaces 212 are configured to space the battery cells B received adjacent to each other apart from each other by a predetermined distance. The cooling member 200 may be made of a metal material that exhibits excellent thermal conductivity, preferably aluminum.

Meanwhile, it is preferable for the length of the first member 210 to be at least 0.5 times the length of the battery cell B such that the battery cell B can be stably supported and heat generated therefrom can be rapidly discharged; however, the present invention is not limited thereto.

The second member 220 is a flat plate having a predetermined thickness, and one end of the first member 210 is fixed to the center of the second member, which corresponds to the center of gravity. At this time, the first member 210 and the second member 220 are perpendicular to each other.

As described above, the cooling member 200, which is constituted by the first member 210 and the second member 220, is fixed to the bottom plate 120. As shown in FIG. 7, a part of an edge of the second member 220 is located in a state of being recessed in the bottom plate 120, whereby the cooling member 200 is fixed to the bottom plate 120.

Here, it is more preferable for an uneven portion to be provided at an outer surface of the edge of the second member 220 such that the bottom plate 120 and the second member 220 can be more securely fixed to each other in tight contact.

It is preferable for the second member 220 to be located so as to traverse the heat dissipation hole 121 of the bottom plate 120. That is, a central part of the second member 220 is exposed to the outside through the heat dissipation hole 121, and an edge part of the second member is fixed in a state of being recessed in the bottom plate 120 in the vicinity of the heat dissipation hole 121.

Meanwhile, a resin layer 300 configured to discharge heat generated from the battery cell B and to securely fix the battery cell B is located at the outer surface of the battery cell B, i.e., a side surface and a bottom surface of the battery cell B. Specifically, the resin layer 300 is interposed between the side surface of the battery cell B and the first member 210, between a central part of the bottom surface of the battery cell B and the bottom plate 120, and between an edge part of the bottom surface of the battery cell B and the second member 220.

Here, the material for the resin layer 300 is a thermal interface material (TIM), i.e., a material that is thermally conductive and adhesive. For example, an acrylic resin, a urethane resin, or a silicone resin may be used, or any resin having similar physical properties thereto may also be used.

When the battery module is configured to have the above structure, heat generated from the battery cell B is transferred to the resin layer 300 and is then dissipated to the outside through the cooling member 200. Specifically, heat generated from the side surface of the battery cell B sequentially passes through the resin layer 300, the first member 210, and the second member 220, and in particular, the second member 220 is located in the heat dissipation hole 121, which is exposed to the outside, whereby heat dissipation may be rapidly performed. Of course, it is obvious that some of the heat may be dissipated above the first member 210.

In addition, heat generated from the bottom surface of the battery cell B is transferred to the resin layer 300 and is then dissipated through the second member 220.

As such, in the battery module according to the present invention, heat generated not only from the side surface of the battery cell B but also from the bottom surface of the battery cell B may be rapidly dissipated. Furthermore, since the first member 210 and the second member 220 constituting the cooling member 200 are perpendicular to each other and the second member 220 is located in a state of being recessed in the bottom plate 120, the cooling member 200 is securely fixed to the cell frame 100.

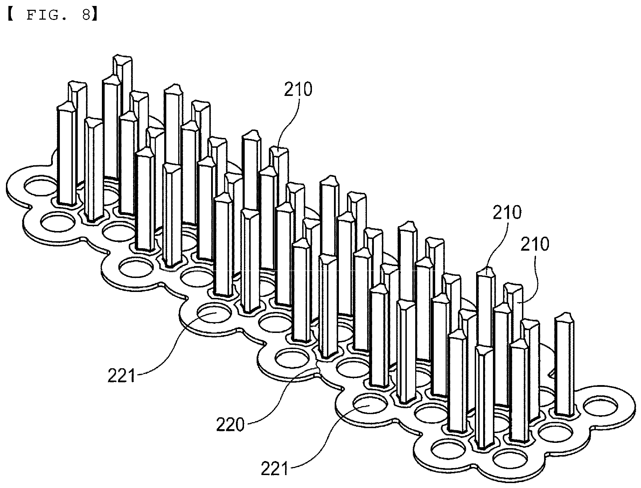

FIG. 8 is a perspective view of a cooling member according to a second embodiment of the present invention. In the first embodiment described with reference to FIG. 6, the cooling member is configured such that one first member is connected to one second member so as to correspond thereto, whereas in the second embodiment, a plurality of first members is provided at one second member.

Specifically, one flat second member 220 is provided with a plurality of openings 221, and a plurality of first members 210 is vertically connected around the openings 221.

Here, the opening 221 is filled with the bottom plate 120 and the bottom plate 120 is also located at upper and lower surfaces near an edge of the opening 221, whereby the cooling member 200 is securely fixed to the bottom plate 120.

Meanwhile, the first member 210 is identical to the first member according to the first embodiment described above, and therefore a duplicate description thereof will be omitted.

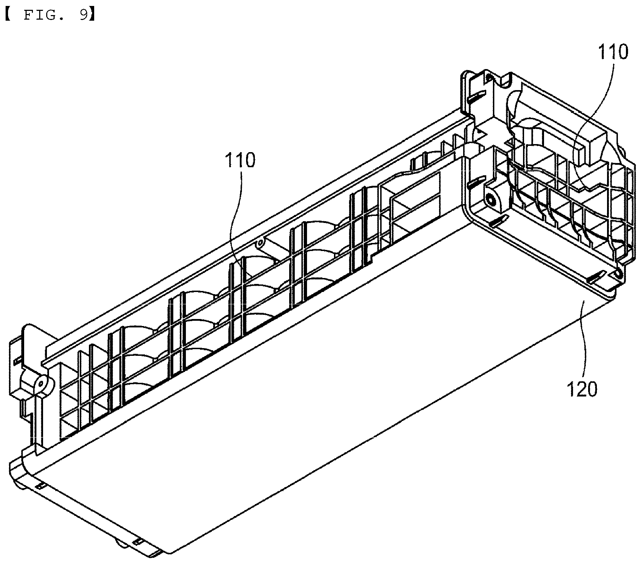

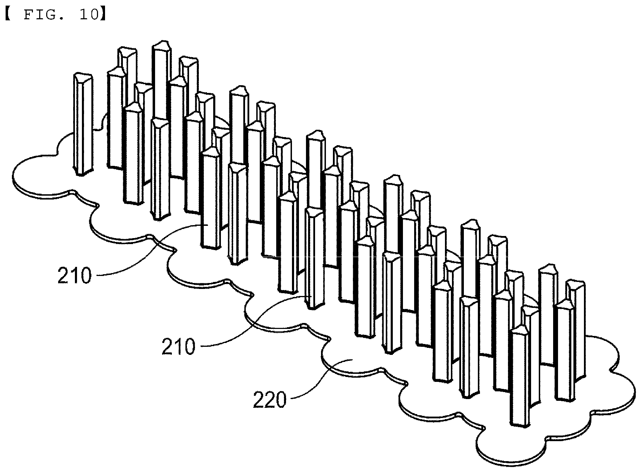

FIG. 9 is a perspective view of a cell frame constituting a battery module according to a third embodiment of the present invention when viewed from below in one direction, and FIG. 10 is a perspective view of a cooling member constituting the battery module shown in FIG. 9.

As shown in FIGs. 9 and 10, in the battery module according to the third embodiment of the present invention, a plurality of first members is provided at one second member. The third embodiment is identical to the second embodiment except that the second member 210 is provided with no opening and the bottom plate 120 is provided with no heat dissipation hole.

In the third embodiment, as described above, the cooling member 200 has the advantage of being more structurally robust and being relatively easy to manufacture.

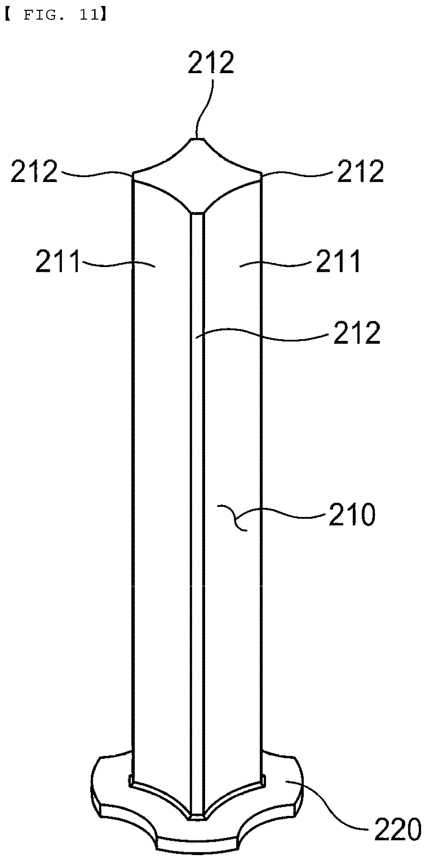

FIG. 11 is a perspective view of a cooling member according to a fourth embodiment of the present invention.

The cooling member 200 according to the fourth embodiment includes a first member 210 and a second member 220, wherein the first member 210 may include four first surfaces 211 and four second surfaces 212 configured to connect neighboring ones of the first surfaces 211 to each other.

In the same manner as in the first embodiment, it is preferable for the first surface 211 to be curved with a radius of curvature equal or similar to the outer surface of the battery cell so as to enclose the outer surface of the battery cell.

The second member 220 is a flat plate having a predetermined thickness, and one end of the first member 210 is fixed to the center of the second member 220, which corresponds to the center of gravity, in a state of being perpendicular thereto.

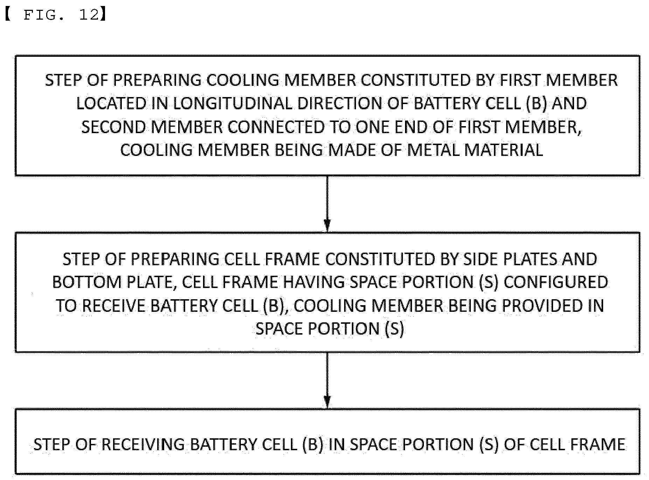

FIG. 12 is a flowchart illustrating a method of manufacturing the battery module according to the first embodiment of the present invention. The method of manufacturing the battery module according to the first embodiment will be described by way of example with reference to FIG. 12.

The method may include a first step of preparing a cooling member, a second step of preparing a cell frame having the cooling member fixed thereto, and a third step of receiving a battery cell in the cell frame.

First, in the first step, a cooling member made of a metal material, which is constituted by a first member located in a longitudinal direction of a battery cell and a second member connected to one end of the first member, is prepared, and the method is not particularly limited.

In the second step, a cell frame, which is constituted by a plurality of side plates and a bottom plate and has a space portion configured to receive the battery cell, is prepared, and a plurality of cooling members prepared in the first step is fixed in the space portion. Here, it is preferable for the cell frame and the cooling members to be manufactured as an integral structure by insert injection molding of the cooling members during injection molding of the cell frame.

Meanwhile, heat dissipation holes of the bottom plate may be formed during injection molding of the cell frame; however, the present invention is not necessarily limited thereto. After the cell frame is manufactured, the heat dissipation holes may be additionally formed by punching.

The third step is a step of receiving battery cells in the space portion of the cell frame, more specifically such that the cooling members are located at outer surfaces of the battery cells.

In addition, it is preferable for the space portion to be filled with a predetermined amount of a thermally conductive resin layer configured to fix the battery cells and to transfer heat generated from the battery cells after the second step, i.e., before the battery cells are received in the cell frame. Alternatively, filling of the thermally conductive resin layer after receiving of the battery cells is also possible.

The present invention may provide a battery pack including the battery module as described above. The battery module or the battery pack may be mounted in a device. For example, the device may be an electronic device including a large-capacity battery, such as an electric vehicle, a hybrid electric vehicle, or a plug-in hybrid electric vehicle.

Although the specific details of the present invention have been described in detail, those skilled in the art will appreciate that the detailed description thereof discloses only preferred embodiments of the present invention and thus does not limit the scope of the present invention. Accordingly, those skilled in the art will appreciate that various changes and modifications are possible, without departing from the category and the technical idea of the present invention, and it will be obvious that such changes and modifications fall within the scope of the appended claims.

### (Description of Reference Symbols)

100: Cell frame
110: Side plate
120: Bottom plate
121: Heat dissipation hole
200: Cooling member
210: First member
211: First surface 212: Second surface
220: Second member
221: Opening
300: Resin layer
B: Battery cell
S: Space portion

## Claims

1. A battery module comprising:
a plurality of battery cells;
a cell frame including a plurality of side plates and a bottom plate connecting lower edges of the plurality of side plates to each other, wherein the cell frame has a space portion accommodating the plurality of the battery cells; and
a cooling member located in the space portion and being disposed so as to enclose a part of an outer surface of each of the plurality of battery cells accommodated in the space portion,
wherein the cooling member comprises a first member and a second member, the first member being disposed along a longitudinal direction of the plurality of battery cells and the second member being connected to one end of the first member, and
wherein a part of the second member is recessed in the bottom plate.

2. The battery module according to claim 1, wherein the first member includes a plurality of first surfaces and a plurality of second surfaces, wherein each of the plurality of first surfaces includes a curved shape having a predetermined radius of curvature, so as to enclose the part of the outer surface of an adjacent one of the plurality of battery cells, wherein the plurality of second surfaces interconnect the plurality of first surfaces adjacent to each other, and
wherein the second member is a flat plate having a predetermined thickness and is disposed perpendicular to the first member.

3. The battery module according to claim 2, wherein each of the first member and the second member include a metal.

4. The battery module according to claim 3, wherein the second member includes an uneven portion provided at an outer surface of an edge of the second member, and
wherein the uneven portion is recessed in the bottom plate.

5. The battery module according to claim 3, wherein the bottom plate includes a plurality of heat dissipation holes, and
wherein a middle part of the second member is exposed to an outside through the plurality of heat dissipation holes.

6. The battery module according to claim 5, wherein the one end of the first member is located in a center of the second member.

7. The battery module according to claim 3, wherein a resin layer is interposed between the outer surface of each of the plurality of battery cells and an inner surface of the cell frame, and between the outer surface of each of the plurality of battery cells and the cooling member.

8. The battery module according to claim 7, wherein the resin layer includes a thermally conductive resin.

9. The battery module according to claim 3, wherein three or more cooling members are located at the outer surface of each of the plurality of battery cells.

10. The battery module according to claim 3, wherein the cooling member includes a plurality of first members being fixed to one second member, wherein the second member includes a plurality of openings.

11. A battery pack comprising the battery module according to any one of claims 1 to 10.

12. A battery module manufacturing method comprising:
a first step of preparing a cooling member including a first member and a second member, the first member being disposed along a longitudinal direction of a battery cell and the second member being connected to one end of the first member, wherein the cooling member includes a metal material;
a second step of preparing a cell frame including a plurality of side plates and a bottom plate, the cell frame having a space portion configured to receive the battery cell, the cooling member being accommodated in the space portion; and
a third step of receiving the battery cell in the space portion of the cell frame,
wherein in the second step, the cell frame is prepared by insert injection molding, such that a part of the second member is recessed in the bottom plate.

13. The battery module manufacturing method according to claim 12, further comprising filling the space portion with a thermally conductive resin, such that a thermally conductive resin layer is interposed between an outer surface of the battery cell and an inner surface of the cell frame, and between the outer surface of the battery cell and the cooling member after the second step.

14. The battery module manufacturing method according to claim 12, wherein, in the second step, the bottom plate includes a plurality of heat dissipation holes such that a part of the second member is exposed to an outside.
